# EUROPÄISCHE PATENTSCHRIFT

(11) **EP 3 898 746 B1**
(45) Veröffentlichungstag und Bekanntmachung des Hinweises auf die Patenterteilung: **08.02.2023**
(21) Anmeldenummer: 19828711.2
(22) Anmeldetag: 18.12.2019
(51) Int. Cl.: C08G 18/48, C08G 18/10, C08G 18/22, C08G 18/32, C08G 18/38, C08L 75/08, B33Y 70/00, B29C 64/00

(54) **VERFAHREN FÜR DEN 3D-DRUCK VON ZWEIKOMPONENTIGEN POLYURETHANZUSAMMENSETZUNGEN**
METHOD FOR 3D PRINTING OF CURABLE TWO-COMPONENT POLYURETHANE COMPOSITIONS
PROCÉDÉ D'IMPRESSION TRIDIMENSIONNELLE DES COMPOSITIONS DE POLYURÉTHANE DURCISSABLES À DEUX COMPOSANTS

(30) Priorität: 21.12.2018 EP 18215746
(43) Veröffentlichungstag der Anmeldung: 27.10.2021
(73) Patentinhaber: Sika Technology AG, 6340 Baar (CH)
(72) Erfinder: LOOTENS, Didier, 8700 Küsnacht (CH); LIARD, Maxime, 8053 Zürich (CH); BERNARDINI, Nicolas, 95600 Eaubonne (FR); CHAIGNON-LESETRE, Fleur, 60590 Serifontaine (FR); CORSARO, Antonio, 8105 Regensdorf (CH)
(74) Vertreter: Sika Patent Attorneys
(86) Internationale Anmeldenummer: PCT/EP2019/085951
(87) Internationale Veröffentlichungsnummer: WO 2020/127484

(56) Entgegenhaltungen:
- WO-A1-2019/002538
- CN-A- 104 479 343
- CN-A- 106 142 564
- DE-A1- 3 709 631
- DE-A1- 19 937 770

## Beschreibung

### Technisches Gebiet

Die Erfindung betrifft ein Verfahren für den 3D-Druck von zweikomponentigen Polyurethanzusammensetzungen sowie damit hergestellte Formkörper.

### Stand der Technik

3D-Druck ist ein in jüngerer Zeit vermehrt eingesetztes Verfahren zur Herstellung von dreidimensionalen Objekten. Es wird vor allem im kommerziellen Bereich, etwa für Prototypen oder Designstudien, als schnelle und flexible Alternative zum Spritzguss eingesetzt und erlaubt eine praktisch unbeschränkte Formgebung bei der Herstellung kleinerer Objekte. Das 3D-Druckverfahren wird auch als Freiform-Konstruktion oder Additive Manufacturing (AM) bezeichnet. Typische Druckmaterialien für den 3D-Druck sind thermoplastische Kunststoffe wie Polymilchsäure (Polylactide, PLA) oder Acrylnitril-Butadien-Styrol (ABS), die erhitzt und im plastischen Zustand punktweise oder schichtweise aufgetragen werden und danach rasch erstarren und fest werden. Meist erfolgt der Materialauftrag über einen beweglichen Druckkopf, der von einem Computer gesteuert wird. Die Polymere erlangen durch Abkühlen genügend Festigkeit, um die gegebene Form zu halten. Dadurch dass die Materialien thermoplastisch sind und einen genügend niedrigen Schmelzbereich für eine praktische Applikation aufweisen müssen, sind die aus solchen Materialen hergestellten Formkörper jedoch chemisch und physikalisch beschränkt, insbesondere hinsichtlich chemischer Beständigkeit, Wärmebeständigkeit, Witterungsbeständigkeit und mechanischer Eigenschaften wie Elastizität und Zähigkeit. Zusätzlich ist das 3D-Druckverfahren insofern limitiert, dass durch das nötige Erhitzen der Materialien heizbare 3D-Druckelemente nötig sind und das Verfahren relativ langsam wird, da der Abkühlprozess mit dem Erstarren der gedruckten Materialien die Druckgeschwindigkeit einschränkt.

Es gab bereits Versuche, anstelle der gängigen thermoplastischen Druckmaterialien solche zu verwenden, welche während oder nach dem Druck rasch chemisch aushärten und ein duroplastisches oder elastomeres Material bilden. Chemische Basis solcher Druckmaterialien sind etwa RTV-2 Silikone, zweikomponentige Epoxymaterialien oder zweikomponentige Polyurethane. Zweikomponentige Materialien sind bei einen solchen Verfahren insofern vorteilhaft, wenn nicht wesentlich, als die hochreaktiven Bestandteile wie Härter und Bindemittel zunächst getrennt vorliegen und erst beim oder nach dem Mischen der beiden Komponenten zu härten beginnen. Dabei ist es wichtig, dass die Härtungsreaktion erstens rasch vorangeht, damit das 3D-Druckverfahren mit praktikabler Geschwindigkeit durchgeführt werden kann, aber zweitens auch homogen in tieferen Schichten aushärten kann und nicht von externen Härtungsfaktoren wie Luftfeuchtigkeit abhängig ist. Dies ist jedoch nicht einfach zu bewerkstelligen. Die zweikomponentigen Zusammensetzungen müssen reaktiv genug untereinander sein, dass ein rasches 3D-Druckverfahren möglich ist. Jedoch beginnen solche zweikomponentige Zusammensetzungen bereits beim Mischen zu reagieren, was einen raschen Viskositätsanstieg zur Folge hat. Dies ist ein Problem beim 3D-Druck, da eine homogene Mischung erreicht werden muss und daher eine gewisse Verweilzeit in einem statischen oder dynamischen Mischer vonnöten ist. Wenn jedoch die Reaktivität zu hoch ist, steigt die Viskosität durch fortschreitende Aushärtung bereits im Mischer signifikant an und eine genaue, konstante Applikation wird schwierig und zumindest die Misch- und Applikationszeit wird deutlich eingeschränkt. Dies ist auch mit Erwärmen oder auf sonstige Weise kaum kontrollierbar, zumal durch Erwärmen auch die chemische Aushärtungsreaktion meist noch weiter beschleunigt wird. Im ungünstigsten Fall kommt es zur Verstopfung der Applikationsdüse. Dies ist selbstverständlich unerwünscht.

Die Patentanmeldung CN 104479343 A beschreibt zum Beispiel zweikomponentige Polyurethanzusammensetzungen umfassend ein Polyol, ein Polyisocyanat und einen Härtungskatalysator, welche in einem 3D-Druckverfahren appliziert werden. Diese Zusammensetzungen müssen aber genau auf den 3D-Drucker abgestimmt werden, um die oben beschriebenen Probleme möglichst zu vermeiden. Im Allgemeinen bleibt aber die Herausforderung, die Zusammensetzung so einzustellen, dass sie rasch genug aushärtet, um einen praktikablen Druckprozess zu ermöglichen, aber dennoch nicht den 3D-Drucker verstopft, weil die Aushärtung zu schnell fortschreitet. Gleichzeitig braucht es leistungsfähige Pump- und Mischmechanismen für die sich durch die fortschreitende Aushärtung laufend verdickende Mischung.

Ein besser kontrollierbares Verfahren wird in US 9453142 B2 gelehrt, wo eine Polyurethanzusammensetzung umfassend ein blockiertes Polyisocyanat und ein über Licht aktivierbarer chemischer Härtungsmechanismus offenbart wird. Dieses Verfahren löst zwar das Problem der Härtungskontrolle, ist aber von komplexen, teuren Rohstoffen abhängig und benötigt eine geeignete Lichtquelle zur Aushärtung.

Auch das Dokument CN 106142564 A offenbart ein 3D-Druckverfahren für Polyurethanzusammensetzungen, allerdings umfassend einen zusätzlichen Hitzehärtungsschritt nach dem Druckverfahren. Dies limitiert die mögliche Geometrie und Grösse der gedruckten Formkörper und schränkt die Effizienz und Geschwindigkeit des Verfahrens durch die zusätzlich nötige Hitzebehandlung ein. Allgemein wären Polyurethane für 3D-Druck sehr attraktiv, da die erhältlichen Materialien im ausgehärten Zustand eine grosse Bandbreite an mechanischen Eigenschaften und chemischer und thermischer Beständigkeit erlauben und die Rohstoffe günstig und leicht erhältlich sind. Ausserdem ist es relativ einfach, die Reaktivität von zweikomponentigen Polyurethanen auf ein gewünschtes Verfahren einzustellen, etwa durch die Wahl der Polyisocyanate oder des Härtungskatalysators. Allerdings ist wie oben erwähnt immer ein Kompromiss einzugehen. Entweder ist die Topfzeit, also die Zeit nach dem Mischen der Komponenten, während der eine Applikation noch möglich ist, sehr kurz bei Zusammensetzungen, die rasch aushärten und Festigkeit aufbauen, oder aber die Aushärtung und der Festigkeitsaufbau sind langsam, wenn Zusammensetzungen mit langer Topfzeit verarbeitet werden, was den 3D-Druck stark verlangsamt, da bei grösseren Formteilen gewartet werden muss, bis die unteren Schichten genügend ausgehärtet sind.

Es besteht daher der dringende Wunsch nach einem 3D-Druckverfahren von zweikomponentigen Polyurethanzusammensetzungen, welche beim und nach dem Mischen im 3D-Drucker kaum Viskosität aufbauen und leicht und ohne Erwärmen appliziert werden können, aber nach Applikation sehr rasch aushärten, damit ein 3D-Druckverfahren mit schnellen Zyklen durchgeführt werden kann.

Besonders wünschenswert wäre ein solches Verfahren, das duroplastische oder elastomere Formteile mit weitgehend frei einstellbaren mechanischen Eigenschaften ermöglicht, welche aus gängigen, günstig erhältlichen Rohstoffen bestehen. Weiterhin besonders wünschenswert wäre es, die Topfzeit solcher Zusammensetzungen für die gewünschte 3D-Druckanwendung frei einstellen zu können, damit sie leicht auf verschiedenen 3D-Drucksystemen implementiert werden kann.

### Darstellung der Erfindung

Aufgabe der vorliegenden Erfindung ist es daher, ein 3D-Druckverfahren für zweikomponentige Polyurethanzusammensetzung zur Verfügung zu stellen, welches die obengenannten Bedürfnisse erfüllt. Aufgabe der vorliegenden Erfindung ist es also, ein 3D-Druckverfahren von zweikomponentigen Polyurethanzusammensetzungen zur Verfügung zu stellen, wobei die zweikomponentigen Polyurethanzusammensetzungen nach dem Mischen im 3D-Drucker kaum Viskosität aufbauen und leicht und ohne Erwärmen appliziert werden können, aber nach Applikation sehr rasch aushärten, damit ein 3D-Druckverfahren mit schnellen Zyklen durchgeführt werden kann.

Überraschenderweise wird diese Aufgabe mit dem erfindungsgemässen Verfahren gemäss Anspruch 1 gelöst. Die im Verfahren verwendete Polyurethanzusammensetzung umfasst ein Polyol, bevorzugt ein kurzkettiges Diol sowie eine Verbindung mit mindestens einer Thiolgruppe in der ersten Komponente und ein Polyisocyanat in der zweiten Komponente. Weiterhin enthält die Zusammensetzung einen Metallkatalysator für die Aushärtung der Zusammensetzung, welcher Thiokomplexe bilden kann, wobei das Verhältnis von Thiolgruppen zu Metallatomen in der Zusammensetzung festgelegt ist. Die Zusammensetzung verfügt im ausgehärteten Zustand über sehr weitgehend einstellbare mechanische, chemische und thermische Eigenschaften, die über jene der heute gängigen thermoplastischen Druckmaterialien hinausgehen. Das erfindungsgemässe Verfahren ermöglicht duroplastische oder elastomere Formteile mit weitgehend frei einstellbaren mechanischen Eigenschaften, welche aus gängigen, günstig erhältlichen Rohstoffen bestehen. Weiterhin erlaubt es das erfindungsgemässe Verfahren, die Topfzeit solcher Zusammensetzungen für die gewünschte 3D-Druckanwendung frei einstellen zu können, damit sie leicht auf verschiedenen 3D-Drucksystemen implementiert werden kann.

Die Vorteile des erfindungsgemässen Verfahrens im Vergleich zu herkömmlichen 3D-Druckverfahren mit thermoplastischen Materialien sind vielfältig:
Ein Vorteil ist, dass 3D-gedruckte Formkörper mit deutlich verbesserten mechanischen Eigenschaften (wie beispielsweise Elastizität, Zähigkeit, Druck- und Zugfestigkeit) erhalten werden können. Es können echte duroplastische und elastomere Formteile hergestellt werden, die über eine deutlich verbesserte Temperatur-, Witterungs- und Belastungsstabilität verfügen.

Ein zusätzlicher Vorteil ist die immense Formulierungsfreiheit bei der erfindungsgemäss verwendeten Polyurethanzusammensetzung. Es können gängige, günstige Rohstoffe verwendet werden, und die mögliche resultierende Bandbreite an Eigenschaften des ausgehärteten Materials entspricht der, die in heutigen Polyurethanen allgemein möglich ist.

Ein weiterer Vorteil ist die einfachere und schnellere Applikation, da nicht mehr erwärmt und aufgeschmolzen werden muss und durch die niedrige Viskosität der Komponenten **A** und **B** und der gemischten Zusammensetzung eine leichtere und raschere Förderbarkeit erreicht wird. Zusätzlich muss nicht gewartet werden, bis das Material erstarrt, und das 3D-Druckverfahren kann somit viel schneller durchgeführt werden als mit herkömmlichen thermoplastischen Materialien.

Ein zusätzlicher Vorteil des erfindungsgemässen Verfahrens ist die praktisch beliebig einstellbare Topfzeit der erfindungsgemäss verwendeten Polyurethanzusammensetzung, die auf nahezu jedes 3D-Drucksystem optimiert werden kann. Dies erlaubt eine bisher nicht erreichte Flexibilität in der Anwendung.

Ein weiterer Vorteil der erfindungsgemäss verwendeten Polyurethanzusammensetzung ist, dass die Viskosität während der Topfzeit auch im gemischten Zustand kaum ansteigt und somit eine sehr leichte und genaue Applikation möglich ist. Nach Ablauf der Topfzeit jedoch härtet das Material sehr schnell aus. Dadurch kann ein schnelles und effizientes Druckverfahren mit raschem Aufbau der Schichten durchgeführt werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Verfahren zur Applikation einer zweikomponentigen Polyurethanzusammensetzung mittels 3D-Druck, umfassend die Schritte
- Bereitstellen einer pumpfähigen ersten Komponente **A**, umfassend mindestens ein Polyol **A1** mit einer OH-Funktionalität im Bereich von 1.5 bis 4 und einem mittleren Molekulargewicht (Zahlenmittel) Mₙ im Bereich von 250 bis 15'000 g/mol, und
   bevorzugt mindestens ein Diol **A2** mit zwei Hydroxylgruppen, die über eine C2- bis C9-Kohlenstoffkette verbunden sind, und
   mindestens eine Verbindung **T**, die mindestens eine Thiolgruppe aufweist;
- Zuführen der ersten Komponente **A**, insbesondere mittels einer Pumpe, zu einem kontinuierlichen Mischer umfassend
   - einen Einlass,
   - einen Mischbereich mit mindestens einem statischen oder dynamischen Mischelement, der mit dem Einlass verbunden ist,
   - einen Auslass, in den der Mischbereich mündet,
   wobei die erste Komponente **A** durch den mindestens einen Einlass in den Mischbereich gefördert wird;
- Zuführen von einer pumpfähigen zweiten Komponente **B** in den Mischbereich des kontinuierlichen Mischers, wobei die zweite Komponente **B** mindestens ein Polyisocyanat **I** umfasst;
- Vermischen der ersten Komponente **A** mit der zweiten Komponente **B** im Mischbereich des kontinuierlichen Mischers zu einer gemischten, härtbaren Polyurethanzusammensetzung;
- Fördern der gemischten, härtbaren Polyurethanzusammensetzung zum Auslass; und
- schichtweises Applizieren der gemischten, härtbaren Polyurethanzusammensetzung, insbesondere über einen beweglichen Druckkopf;
wobei in einer der beiden Komponenten **A** und **B** zusätzlich mindestens ein Metallkatalysator **K** für die Reaktion von Hydroxylgruppen und Isocyanatgruppen enthalten ist, der Thiokomplexe bilden kann, und
das molare Verhältnis aller Thiolgruppen der mindestens einen Verbindung **T** zu allen Metallatomen des mindestens einen Metallkatalysators **K** zwischen 1:1 und 250:1 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23°C bezeichnet. Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der beiden Komponenten verarbeitet werden kann, bevor die Viskosität durch das Voranschreiten der Vernetzungsreaktion zu hoch für eine weitere Verarbeitung geworden ist.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25 %, gemeint sind.

Der Begriff "pumpfähig" bedeutet, dass das betreffende Material zumindest so fliessfähig ist, dass es durch Pumpen oder allgemein Druck durch beispielsweise einen Schlauch oder ein Rohr gefördert werden kann. Bevorzugt bedeutet "pumpfähig", dass das Material bei Raumtemperatur pumpfähig ist. Es kann jedoch vorteilhaft sein, das Material zur Erhöhung der Pumpfähigkeit leicht zu erwärmen, beispielsweise auf 30 bis 60°C.

Als "Raumtemperatur" wird im vorliegenden Dokument eine Temperatur von 23°C bezeichnet.

Als "lagerstabil" oder "lagerfähig" wird eine Substanz oder eine Zusammensetzung bezeichnet, wenn sie bei Raumtemperatur in einem geeigneten Ge-binde während längerer Zeit, typischerweise mindestens 3 Monaten bis zu 6 Monaten und mehr, aufbewahrt werden kann, ohne dass sie sich in ihren An-wendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen.

Der 3D-Druck ist ein schalungsfreies formgebendes Verfahren. Das Material wird Schicht für Schicht aufgetragen und so dreidimensionale Gegenstände erzeugt. Dabei erfolgt der schichtweise Aufbau computergesteuert aus einem oder mehreren flüssigen oder festen Werkstoffen nach vorgegebenen Massen und Formen.

Unter "3D-Druck" auch als "Freiform-Konstruktion" bezeichnet, versteht man im vorliegenden Dokument ein Verfahren zur Herstellung von Formkörpern, bei dem ein verformbares Material einschichtig oder in mehreren Schichten oder kleineren Portionen aufgebracht wird, und nach dem Aushärten einen festen Formkörper bildet. Das Aufbringen der Schichten erfolgt hierbei nicht durch Versprühen. Unter "dynamisches Mischelement" oder "dynamischer Mischer" wird im vorliegenden Dokument ein Bauteil verstanden, das bewegbare Elemente umfasst und geeignet ist, feste und/oder flüssige Bestandteile zu vermischen.

Ein "statischer Mischer" oder "Statikmischer" ist eine Vorrichtung zum Mischen von Fluiden, in der allein die Strömungsbewegung die Vermischung bewirkt und die nicht über bewegte Elemente verfügt. Er besteht insbesondere aus strömungsbeeinflussenden Elementen, die meist schrauben-, lamellen- oder auch gitterförmig sind, und die in einem Rohr oder Hohlraum angeordnet sind, durch das oder den das zu mischende Fluid fliesst.

Die erste Komponente **A** enthält zunächst mindestens ein Polyol **A1** mit einer OH-Funktionalität im Bereich von 1.5 bis 4 und einem mittleren Molekulargewicht im Bereich von 250 bis 15'000 g/mol.

Geeignete Polyole **A1** sind prinzipiell alle gängigen Polyole zur Herstellung von Polyurethanpolymeren. Geeignet sind insbesondere Polyetherpolyole, Polyesterpolyole, Poly(meth)acrylatpolyole, Polybutadienpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 15'000 g/mol, sowie Polyoxyethylendiole, Polyoxy-ethylentriole, Polyoxypropylendiole und Polyoxypropylentriole mit einem Molekulargewicht von 400 bis 15'000 g/mol.

Ebenfalls besonders geeignet sind so genannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxy-propylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1 ,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate, die aus der Copolymerisation von CO₂ mit Epoxiden, wie Ethylenoxid und Propylenxid, zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Alle genannten Polyole weisen ein mittleres Molekulargewicht von 250 bis 15'000 g/mol, insbesondere von 400 bis 10'000 g/mol, bevorzugt von 1'000 bis 8'000 und eine mittlere OH-Funktionalität im Bereich von 1.5 bis 4, bevorzugt 1.7 bis 3, auf. Die Zusammensetzung kann jedoch durchaus auch Anteile an Monoolen (Polymere mit nur einer Hydroxylgruppe) enthalten.

Besonders geeignete Polyole sind Polyesterpolyole und Polyetherpolyole, insbesondere Polyoxyethylenpolyol, Polyoxypropylenpolyol und Polyoxypropylen-polyoxyethylenpolyol, bevorzugt Polyoxyethylendiol, Polyoxypropylendiol, Polyoxy-ethylentriol, Polyoxypropylentriol, Polyoxypropylenpolyoxyethylendiol und Polyoxy-propylenpolyoxyethylentriol.

Die erste Komponente **A** enthält weiterhin bevorzugt mindestens ein Diol **A2** mit zwei Hydroxylgruppen, die über eine C2- bis C9-Kohlenstoffkette verbunden sind.

Geeignet als Diol **A2** sind insbesondere lineare oder verzweigte Alkylendiole mit zwei primären oder sekundären Hydroxylgruppen, Alkylendiole mit einer primären und einer sekundären Hydroxylgruppe sowie cycloaliphatische Diole.

Bevorzugt ist das Diol **A2** ein lineares aliphatisches Diol mit zwei primären Hydroxylgruppen, die über eine C4- bis C9-Kohlenstoffkette verbunden sind. Ein solches Diol hat den Vorteil, dass Polyurethane mit besonders hohen E-Moduln im Bereich niedriger Dehnung, beispielsweise zwischen 0 und 5%, erhalten werden, was insbesondere für zähe, formstabile Formteile vorteilhaft ist.

Insbesondere ist das Diol **A2** ausgewählt aus der Gruppe bestehend aus Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Besonders bevorzugt ist das Diol **A2** ausgewählt aus der Gruppe bestehend aus 1,4-Butandiol, 1,5-Pentandiol, 1,6-Hexandiol, 1,7-Heptandiol, 1,8-Octandiol und 1,9-Nonandiol.

Am meisten bevorzugt ist das Diol **A2** ausgewählt aus der Gruppe bestehend aus 1,4-Butandiol, 1,5-Pentandiol, 1,6-Hexandiol und 1,9-Nonandiol. Diese Diole sind kommerziell gut zugänglich und ermöglichen Polyurethane mit besonders hohen E-Moduln bei geringer Dehnung nach der Aushärtung.

Bevorzugt enthält die erste Komponente **A** zwischen 1 und 25 Gew.-%, insbesondere 5 bis 20 Gew.-%, besonders bevorzugt 10 bis 15 Gew.%, an Diol **A2**.

Zusätzlich zu diesen genannten Polyolen **A1** und **A2** können kleine Mengen von weiteren niedermolekularen zwei- oder mehrwertigen Alkoholen wie beispielsweise Diethylenglykol, Triethylenglykol, die isomeren Dipropylenglykole und Tripropylenglykole, die isomeren Decandiole und Undecandiole, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedermolekulare Alkoxylierungsprodukte der vorgenannten zwei- und mehrwertigen Alkohole, sowie Mischungen der vorgenannten Alkohole mitverwendet werden. Weiterhin können auch Polyole, die andere Heteroatome enthalten, wie beispielsweise Methyldiethanolamin oder Thiodiglykol, enthalten sein.

Die erste Komponente **A** enthält weiterhin mindestens eine Verbindung **T**, die mindestens eine Thiolgruppe aufweist. Geeignet sind alle Verbindungen, die mindestens eine Thiol- oder Mercaptogruppe aufweisen und die sich in der erfindungsgemässen Zusammensetzung einformulieren lassen. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 1 bis 4, am meisten bevorzugt 1 oder 2 Thiolgruppen. Verbindungen mit einer Thiolgruppe haben den Vorteil, dass keine tendenziell schwerlöslichen Komplexe mit dem Metallkatalysator **K** entstehen und die Topfzeit besonders genau eingestellt werden kann. Verbindungen mit zwei Thiolgruppen haben den Vorteil, dass die mechanischen Eigenschaften der Zusammensetzung nach dem Aushärten verbessert werden.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind beispielsweise Ethylenglykol-di(3-mercaptopropionat), Ethylenglykol-dimercaptoacetat, Dipentaerythritol-hexa(3-mercaptopropionat), 2,3-Dimercapto-1,3,4-thiadiazol oder Pentaerythritol-tetrakis(3-mercaptopropionat).

Bevorzugt ist die Verbindung **T** ausgewählt aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

Das molare Verhältnis aller Thiolgruppen der mindestens einen Verbindung T zu allen Metallatomen des mindestens einen Metallkatalysators **K** muss zwischen 1:1 und 250:1 liegen. Bevorzugt liegt es zwischen 2:1 und 150:1, insbesondere zwischen 5:1 und 100:1. Durch dieses Mengenverhältnis kann die Topfzeit eingestellt werden, und zwar innerhalb der intrinsischen Grenzen der jeweiligen Zusammensetzung, bedingt beispielsweise durch den Gehalt an Katalysator, die Reaktivität der enthaltenen Isocyanate und deren Menge. Dabei ist die untere Grenze der Topfzeit diejenige Topfzeit, die in einer gegebenen Zusammensetzung bei Verwendung einer bestimmten Katalysatormenge ohne Zusatz der Verbindung **T** erhalten wird.

In vielen Fällen, die für die erfindungsnahe Anwendung im 3D-Druckverfahren geeignet sind und bedingt durch eine hohe Menge an Isocyanatgruppen in Anwesenheit eines Katalysators aber ohne Verbindung **T**, wird dabei gar keine wirkliche Topfzeit erreicht, und die Zusammensetzung beginnt praktisch beim Mischen der beiden Komponenten auszuhärten.

Generell ist es möglich, die Topfzeit sehr genau einzustellen und damit auf ein gegebenes 3D-Drucksystem zu optimieren. Es können Topfzeiten von weniger als einer Minute bis hin zu wenigen Stunden eingestellt werden.

Die obere Grenze der einstellbaren Topfzeit ist dementsprechend diejenige Topfzeit, die ohne Verwendung eines Katalysators bedingt durch die unkatalysierte Isocyanat-Hydroxylreaktion erreicht werden würde. Diese Reaktion beginnt auch ohne Verwendung eines Katalysators irgendwann nach dem Mischen der beiden Komponenten anzulaufen. Allerdings läuft die Reaktion ohne Katalysator langsamer und unter Ausbildung minderwertiger mechanischer Eigenschaften des gehärteten Materials ab.

Der wesentliche Vorteil, der durch die erfindungsgemässe zweikomponentige Polyurethanzusammensetzung im erfindungsgemässen 3D-Druckverfahren erreicht wird, ist ein ausserordentlich rasch aushärtendes und Festigkeit aufbauendes System, das aber gleichzeitig eine ausreichend lange Topfzeit aufweist, um anwenderfreundlich und dem gegebenen 3D-Drucksystem entsprechend verarbeitet werden zu können. Somit können beispielsweise auch grössere Formteile mit langen Schichtzyklen hergestellt werden. Andererseits kann bei kleineren Formteilen und entsprechender Formulierung der Polyurethanzusammensetzung eine sehr kurze Topfzeit und Aushärtezeit und damit eine sehr hohe Druckgeschwindigkeit erreicht werden.

Die zweite Komponente **B** enthält zunächst mindestens ein Polyisocyanat **I**.

Das Polyisocyanat **I** ist in relativ hohen Mengen enthalten, was für die Ausbildung genügend guter mechanischer Eigenschaften für die Verwendung als Strukturklebstoff oder Kompositwerkstoffmatrix sehr vorteilhaft ist.

Die zweite Komponente enthält so viel an Polyisocyanat **I**, dass mindestens 5 Gew.-%, insbesondere mindestens 6 Gew.-%, bevorzugt mindestens 7.5 Gew.-%, bezogen auf die gesamte Polyurethanzusammensetzung, an Isocyanatgruppen enthalten sind.

Als Polyisocyanate **I** für die Herstellung des Polyurethanpolymers in der erfindungsgemässen Zusammensetzung können alle handelsüblichen, für die Polyurethanherstellung geeigneten Polyisocyanate, insbesondere Diisocyanate, verwendet werden.

Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(iso-cyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.

Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Covestro), Tolonate^{®} HDB und HDB-LV (von Vencorex) und Duranate^{®} 24A-100 (von Asahi Kasei); HDI-Isocyanurate, wie Desmodur^{®} N 3300, N 3600 und N 3790 BA (alle von Covestro), Tolonate^{®} HDT, HDT-LV und HDT-LV2 (von Vencorex), Duranate^{®} TPA-100 und THA-100 (von Asahi Kasei) und Coronate^{®} HX (von Nippon Polyurethane); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate, wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); sowie gemischte Isocyanurate auf Basis TDI/HDI, zum Beispiel als Desmodur^{®} HL (von Covestro). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Covestro) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Covestro), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gew.-%, insbesondere 60 bis 90 Gew.-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat der zweiten Komponente kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem stöchiometrischen Überschuss vorliegen.

In der erfindungsgemässen Zusammensetzung ist Polyisocyanat **I** bevorzugt in einer Menge von 10 Gew.-% bis 35 Gew.-%, insbesondere 15 Gew.-% bis 30 Gew.-%, besonders bevorzugt 20 Gew.-% bis 25 Gew.-%, bezogen auf die gesamte Zusammensetzung, vorhanden.

Die erste Komponente **A** und/oder die zweite Komponente **B** enthält weiterhin mindestens einen Metallkatalysator **K** für die Reaktion von Hydroxylgruppen und Isocyanatgruppen, der Thiokomplexe bilden kann. Als Metallkatalysator **K** sind somit alle Metallkatalysatoren geeignet, welche in der Polyurethanchemie als Vernetzungskatalysator eingesetzt werden können und gleichzeitig in Gegenwart von Thiolen mit diesen Thiokomplexe bilden können.

Bevorzugt ist der Metallkatalysator **K** nur in der ersten Komponente **A** enthalten. Dies hat den Vorteil, dass eine bessere Lagerstabilität erreicht wird.

Geeignete Metallkatalysatoren sind beispielsweise Bismut-, Zink-, Zinn- oder Zirkoniumverbindungen, was Komplexe und Salze dieser Metalle einschliesst.

Bevorzugt umfasst der Metallkatalysator K eine Bismut-Verbindung, insbesondere eine Bismut(III)-Verbindung. Eine Bismut-Verbindung hat den Vorteil, dass sie, neben den erwünschten Eigenschaften als Katalysator und Thiokomplex-Bildner, eine geringe Akuttoxizität besitzt.

Als Bismut-Verbindung kann eine Vielzahl von herkömmlichen Bismut-Katalysatoren verwendet werden. Dabei handelt es sich beispielsweise um Bismutcarboxylate wie z.B. Bismut-Acetat, -Oleat, -Octoat oder -Neodecanoat, Bismutnitrat, Bismuthalogenide wie z.B. Bromid, Chlorid, lodid, Bismutsulfid, basische Bismutcarboxylate wie z.B. Bismutyl-neodecanoat, Bismut-subgallat oder Bismut-subsalicylat, sowie Gemische davon.

In einer bevorzugten Ausführungsform ist der Metallkatalysator **K** ein Bismut(III)-Komplex, der mindestens einen Liganden auf 8-Hydroxychinolinbasis aufweist. Solche Komplexe sind beschrieben in der EP 1551895. Bevorzugt handelt es sich dabei um ein Bismut(III)-Carboxylat, das ein Moläquivalent eines 8-Hydroxychinolinliganden aufweist.

In einer weiteren bevorzugten Ausführungsform ist der Metallkatalysator **K** ein Bismut(III)-Komplex, der mindestens einen Liganden auf 1,3-Ketoamidbasis aufweist. Solche Komplexe sind beschrieben in der EP 2791153. Bevorzugt handelt es sich dabei um ein Bismut(III)-Carboxylat, das 1 bis 3 Moläquivalente eines 1,3-Ketoamidliganden aufweist.

Die Polyurethanzusammensetzung kann neben den bereits erwähnten weitere Bestandteile, wie sie der Fachmann aus der Zweikomponenten-Poly-urethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln, sowie flammhemmende Füllstoffe, wie Hydroxide oder Hydrate, insbesondere Hydroxide oder Hydrate von Aluminium, bevorzugt Aluminiumhydroxid.

Die Zugabe von Füllstoffen ist dahingehend von Vorteil, dass dadurch die Festigkeit der ausgehärteten Polyurethanzusammensetzung erhöht wird. Bevorzugt enthält die Polyurethanzusammensetzung mindestens einen Füllstoff ausgewählt aus der Gruppe bestehend aus Calciumcarbonat, Russ, Kaolin, Baryt, Talk, Quarzmehl, Dolomit, Wollastonit, Kaolin, calciniertes Kaolin und Glimmer (Mica). Als Füllstoffe besonders bevorzugt sind gemahlene Calciumcarbonate, calcinierte Kaoline oder Russ.

Es ist kann von Vorteil sein, eine Mischung verschiedener Füllstoffe einzusetzen. Am meisten bevorzugt sind Kombinationen von gemahlenen Calciumcarbonaten oder calcinierten Kaolinen und Russ.

Der Gehalt an Füllstoff **F** in der Zusammensetzung liegt bevorzugt im Bereich von 5 Gew.-% bis 50 Gew.-%, insbesondere 10 Gew.-% bis 40 Gew.-%, besonders bevorzugt 15 Gew.-% bis 30 Gew.-%, bezogen auf die gesamte Zusammensetzung.

Als weitere Bestandteile können weiterhin insbesondere Lösungsmittel, Weichmacher und/oder Extender, Pigmente, Rheologiemodifizierer wie insbesondere amorphe Kieselsäuren, Trocknungsmittel wie insbesondere Zeolithe, Haftvermittler wie insbesondere organofunktionelle Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Polyurethanzusammensetzung enthält bevorzugt weniger als 0.5 Gew.-%, insbesondere weniger als 0.1 Gew.-%, bezogen auf die gesamte Zusammensetzung, an Carbonsäuren. Allenfalls durch den Metallkatalysator eingebrachte Carboxylatliganden zählen hierbei nicht zu den gemeinten Carbonsäuren.

Eine bevorzugte Polyurethanzusammensetzung enthält eine erste Komponente **A**, welche
- 30 bis 90 Gew.-%, bevorzugt 40 bis 80 Gew.-%, insbesondere 50 bis 70 Gew.-%, Polyol **A1**,
- 1 bis 25 Gew.-%, bevorzugt 5 bis 20 Gew.-%, insbesondere 10 bis 15 Gew.-%, Diol **A2**,
- 1 bis 5 Gew.-%, bevorzugt 1.25 bis 3 Gew.-%, insbesondere 1.5 bis 2 Gew.-%, einer Verbindung **T**, die mindestens eine Thiolgruppe aufweist,
- 0.05 bis 0.5 Gew.-%, bevorzugt 0.1 bis 0.3 Gew.-%, insbesondere 0.15 bis 0.2 Gew.-%, eines Metallkatalysators **K**, und
- 10 bis 50 Gew.-%, bevorzugt 15 bis 40 Gew.-%, insbesondere 20 bis 30 Gew.-%, Füllstoffe,
sowie gegebenenfalls weitere Bestandteile enthält.

Eine bevorzugte Polyurethanzusammensetzung enthält eine zweite Komponente **B**, welche 40 bis 100 Gew.-%, insbesondere 45 bis 80 Gew.-%, Polyisocyanat **I** enthält.

Die erste und die zweite Komponente werden vorteilhaft so formuliert, dass ihr Mischungsverhältnis in Gewichtsteilen und Volumenteilen im Bereich von 10:1 bis 1:10 liegt. Besonders bevorzugt ist ein Volumenmischverhältnis von 5:1 bis 1:5, insbesondere 2:1 bis 1:2, am meisten bevorzugt 1:1. Ein solches Mischverhältnis ermöglicht eine besonders homogene Mischung und eine besonders genaue Förderung der Komponenten.

In der vermischten Polyurethanzusammensetzung liegt das Verhältnis zwischen der Anzahl Isocyanatgruppen und der Anzahl gegenüber Isocyanaten reaktiven Gruppen vor der Aushärtung vorzugsweise ungefähr im Bereich von 1.2 bis 1, bevorzugt 1.15 bis 1.05. Es ist aber auch möglich, wenn auch meist nicht bevorzugt, dass ein unterstöchiometrischer Anteil an Isocyanatgruppen gegenüber Isocyanaten reaktiven Gruppen vorliegt.

Die Polyurethanzusammensetzung ist direkt nach Mischen der Komponenten **A** und **B** bei 23°C pumpfähig, insbesondere fliessfähig. Es ist bevorzugt, dass die Komponenten **A** und **B** sowie die Mischung der beiden Komponenten der Zusammensetzung thixotrop sind, das heisst unter höheren Scherkräften eine niedrigere Viskosität aufweisen. Thixotropie kann beispielsweise durch dem Fachmann wohlbekannte Thixotropieadditive erreicht werden. Solche Thixotropieadditive sind beispielsweise Harnstoffverbindungen der Art, wie sie als Thixotropierungsmittel ("Thixotropy endowing agent") in WO 02/48228 A2 auf den Seiten 9 bis 11 beschrieben sind, Polyamidwachse, Bentonite oder pyrogene Kieselsäuren.

Die Komponenten **A** und **B** sowie die Polyurethanzusammensetzung direkt nach Mischen der Komponenten **A** und **B** besitzen bevorzugt eine Viskosität, gemessen bei 20°C auf einem Platten-Platten Viskosimeter mit Plattenabstand 1 mm und Plattendurchmesser 25 mm, von < 10'000 Pa·s, bevorzugt < 5000 Pa·s, bei einer Scherrate von 0.01 s⁻¹ und < 1000 Pa·s, bevorzugt < 500 Pa·s, bei einer Scherrate von 1 s⁻¹ und < 100 Pa·s, bevorzugt < 75 Pa·s, bei einer Scherrate von 10 s⁻¹. Bevorzugt weisen die beiden Komponenten **A** und **B** jeweils eine Viskosität, gemessen bei 20°C auf einem Platten-Platten Viskosimeter mit Plattenabstand 1 mm und Plattendurchmesser 25 mm, von weniger als 75 Pa s bei einer Scherrate von 10 s⁻¹, auf.

Die Viskosität kann durch Formulierungsmassnahmen, beispielsweise der Auswahl der Polyole und/oder Füllstoffe und den Einsatz von niedrigviskosen Zusätzen wie Weichmachern durch Routineversuche eingestellt werden. Ebenso kann ein scherverdünnendes Verhalten, also die Thixotropie, wie oben beschrieben gegebenenfalls durch Verwendung von Thixotropieadditiven erreicht werden.

Die Herstellung der beiden Komponenten erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

Das Mischen vor dem oder im 3D-Drucker gemäss dem erfindungsgemässen Verfahren erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit der zweiten Komponente beginnt nach der Latenzzeit, ausgelöst durch den über die Verbindung **T** temporär blockierten Katalysator **K**, die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Die beiden Komponenten **A** und **B** werden, bevorzugt mittels einer Pumpe und einer Förderleitung, insbesondere einem Schlauch, vom Ort der Bereitstellung zu dem kontinuierlichen Mischer zugeführt. Es ist auch möglich, dass der Mischer direkt an die Behälter der beiden Komponenten **A** und **B** angebracht ist und die gemischte Mischung der beiden Komponenten **A** und **B** über eine Förderleitung, insbesondere einen Schlauch, zum Druckkopf befördert werden. Bevorzugt sind die beiden Komponenten **A** und **B** sowie deren Mischung gut förderbar. Eine gute Förderbarkeit ist für den 3D-Druck wichtig, weil sie im Normalfall Voraussetzung oder zumindest vorteilhaft für eine homogene Applikation ist. Speziell für den Druck von grossen Formteilen kann die Länge einer Förderleitung zwischen Pumpe und Mischer bis zu einigen Metern und mehr erreichen, was zu hohem Druck in der Förderleitung führen kann. Ein hoher Druck, insbesondere in einem Schlauch, ist unvorteilhaft, weil das Material stark beansprucht wird und bei Überlastung bersten kann. Gut förderbare Zusammensetzungen können einen zu starken Druckaufbau verhindern.

Bevorzugt liegt der Druck in der Förderleitung zwischen Pumpe und kontinuierlichem Mischer unter 40 bar, mehr bevorzugt unter 25 bar.

Die Komponenten **A** und **B** sind bezüglich Mengen an Polyisocyanaten **I**, Katalysator **K** und Verbindung **T** bevorzugt so formuliert, dass die gemischte Zusammensetzung einige Sekunden bis einige Minuten gut formbar bleibt. Dadurch können die Schichten homogen aufgetragen werden, bilden einen guten Zusammenhalt, und die Oberfläche des hergestellten Formkörpers kann, sofern gewünscht, noch nachbehandelt, beispielsweise geglättet, werden.

Wird die Verbindung **T** in zu hoher Menge dosiert, so erreicht die in Schichten applizierte gemischte Polyurethanzusammensetzung erst spät die notwendige Festigkeit, damit eine weitere Schicht darauf aufgetragen werden kann. Dadurch muss die Druckgeschwindigkeit stark verringert werden oder es müssen Wartezeiten eingelegt werden, was die Fertigstellung des Formstücks verzögert. Die Förderung der Komponente **A** und der Komponente **B** und optional weiterer Additive zu dem Mischer kann beispielsweise über eine oder mehrere Fördereinrichtungen, insbesondere Pumpen und Förderleitungen, erfolgen. Die Fördereinrichtungen sind dabei insbesondere über eine Steuereinheit steuerbar, im Besonderen unabhängig voneinander.

Bevorzugt ist der statische oder kontinuierliche Mischer auf einem beweglichen Druckkopf angebracht.

Bevorzugt weist der Druckkopf eine Austragsdüse für die schichtweise Applikation der gemischten Polyurethanzusammensetzung auf.

In einer Ausführungsform ist der statische oder dynamische kontinuierliche Mischer auf dem beweglichen Druckkopf unmittelbar bei dieser Austragsdüse angebracht. Dadurch lässt sich die zeitliche Festigkeitsentwicklung der gemischten Polyurethanzusammensetzung zusätzlich gezielt einstellen.

Bevorzugt beträgt die Verweildauer der zu mischenden oder gemischten Polyurethanzusammensetzung im Mischer weniger als 30 s, mehr bevorzugt weniger als 20 s, besonders bevorzugt weniger als 15 s.

Die mittlere Verweildauer der Bindemittelzusammensetzung in der Mischeinrichtung ist dabei die Zeitdauer, welche ein Partikel in der Mischeinrichtung, vom Einlass bis zum Auslass, durchschnittlich verweilt.

Die gemischte Polyurethanzusammensetzung ist unmittelbar nach dem Einmischen der Komponente **B** in die Komponente **A** gut verformbar und kann mit dem Druckkopf in homogenen Schichten aufgetragen werden. Dabei kann die gemischte Zusammensetzung einschichtig oder mehrschichtig aufgetragen werden. Diese Schichten sind sofort oder spätestens nach kurzer Zeit selbsttragend und zeigen eine rasche Festigkeitsentwicklung. Folgeschichten können daher in kurzen Abständen und in der Höhe von weniger als einem Millimeter bis zu mehreren Zentimetern problemlos auf die darunterliegenden Schichten aufgetragen werden.

Die gemischte Polyurethanzusammensetzung wird bevorzugt über einen beweglichen Druckkopf appliziert.

Der Druckkopf verfügt insbesondere über wenigstens eine Austragsöffnung, welche identisch mit dem Auslass des kontinuierlichen Mischers sein kann, durch welche das aushärtbare Material ausgetragen werden kann.

Die gute Standfestigkeit der aufgetragenen Schichten erübrigt den Einsatz von Stützelementen oder Befestigungselementem.

Bevorzugt befindet sich an der Austragsöffunung eine Austragsdüse, die das ausgetragene Material formt. Die Form ist nicht beschränkt. Bevorzugt weist die Austragsdüse eine rechteckige, quadratische oder runde Form auf. Der Durchmesser der Austragsdüse ist ebenfalls nicht besonders beschränkt. Bei sehr kleinen Durchmessern und gleichzeitig hoher Viskostität der Zusammensetzung werden höhere Drücke zum Auspressen nötig. Es hat sich als vorteilhaft erwiesen, Düsen mit Austrittsöffnungen mit Durchmessern von 0.5 mm bis 1 cm, bevorzugt 1 mm bis 5 mm, insbesondere 2 mm bis 4 mm zu verwenden. In der Austragsdüse können noch weitere formgebende Elemente angebracht sein.

In anderen Ausführungsformen kann die Austrittsöffnung auch grösser sein, bis zu mehreren Zentimetern. Dies erlaubt das Auftragen von grossen Raupen oder Schichten aus gemischter Polyurethanzusammensetzung, wobei diese Raupen oder Schichten Dicken oder Durchmesser von mehreren Zentimetern oder mehr haben können. Die erfindungsgemässe Polyurethanzusammensetzung härtet auch in grossen Schichten oder Volumina gleichmässig und rasch aus.

In einer bevorzugten Variante ist der Druckkopf in ein, zwei oder drei Raumrichtungen bewegbar. Besonders bevorzugt ist ein Druckkopf, welcher in drei Raumrichtungen bewegbar ist. Dadurch können in besonders einfacher Art und Weise nahezu beliebig geformte Formkörper hergestellt werden.

Die Bewegung des Druckkopfs kann insbesondere realisiert werden, indem der Druckkopf auf einen herkömmlichen Roboterarm montiert ist, welcher in ein, zwei oder drei Raumrichtungen bewegbar ist.

Bevorzugt befindet sich der Druckkopf auf einem 3-Achsen-Portalroboter-System. Dies ermöglicht den raschen Druck auch von grossen Formkörpern mit flexibler Formgebung.

Es ist auch möglich, Bewegungen in ein, zwei oder drei Raumrichtungen durch entsprechende Bewegungen des Bauraumbereichs zu realisieren. Der Bauraumbereich ist dabei derjenige Bereich, beispielsweise eine Fläche, auf welche der Formkörper aufgebaut wird.

Mit dem erfindungsgemässen Verfahren können überraschend schnell Formkörper durch schichtweisen Auftrag oder als Einzelschicht oder -Raupe erstellt werden. Die Höhe einer einzelnen Schicht, typischerweise in einer Richtung im Wesentlichen senkrecht zu den durch einzelne Schichten gebildeten Ebenen gemessen, insbesondere in vertikaler Richtung, beträgt bevorzugt 0.5 mm bis 10 mm, mehr bevorzugt 1 mm bis 5 mm, insbesondere 2 mm bis 4 mm. In einigen Ausführungsformen können diese Schichten oder Raupen auch mehrere Zentimeter Dicke oder Durchmesser haben.

Die Gesamthöhe des Formkörpers oder die Dicke aller Einzelschichten des Formkörpers zusammengenommen beträgt bevorzugt 1 cm bis 50 cm oder mehr, mehr bevorzugt 5 cm bis 40 cm, noch mehr bevorzugt 10 cm bis 30 cm.

Die Oberfläche des Formkörpers kann einerseits vor Bildung einer komplett trockenen Haut, mit geeigneten Werkzeugen oder Werkstoffen geglättet, ausgebessert oder speziell verformt werden. Dies kann als Teil der maschinellen Fertigung erfolgen, oder manuell als separater Schritt. Die Oberfläche kann auch mit einer funktionellen oder dekorativen Beschichtung versehen werden, oder es können Teile darin eingebettet werden.

Nach kompletter Aushärtung kann das Formteil ebenfalls weiter bearbeitet werden, beispielsweise durch Schleifen, Schneiden, Fräsen, Wasserstrahl- oder Laserbehandlung oder anderer abrasiver, schneidender oder glättender Techniken. Dadurch kann die Form des Formteils weiter angepasst werden, beispielsweise falls die Oberflächenstruktur oder die Formteildimension noch nicht den Anforderungen genügt.

Der Formköper kann auch, sowohl vor als nach der kompletten Aushärtung, mit geeigneten Werkzeugen geschnitten werden. So können Löcher, Öffnungen, Aussparungen oder auch Schnitte, insbesondere für spätere Bearbeitungsschritte, in den Formkörper eingebracht werden.

Der mit dem erfindungsgemässen Verfahren hergestellte Formkörper kann nahezu jede beliebige Form aufweisen. Der Formkörper ist beispielsweise ein Teil eines Fertigungsgegenstands wie eine Schuhsohle, ein Fertigteil für ein industrielles Bauwerk, ein Prototyp, eine Designstudie, ein Ersatzteil oder ein künstlerisches Objekt. Dabei kann der Formkörper eine Vollform oder eine Hohlform, mit oder ohne Boden, darstellen.

Ein weiterer Gegenstand der vorliegenden Erfindung ist ein Formkörper, hergestellt nach dem erfindungsgemässen Verfahren.

In einer bevorzugten Ausführungsform des erfindungsgemässen Verfahrens wird die Zusammensetzung auf einen weiteren Gegenstand oder Körper aufgetragen. Dabei härtet die ein- oder mehrschichtig aufgetragene Zusammensetzung auf diesem Gegenstand zu einem Formkörper aus. Während dem Aushärten baut die Zusammensetzung eine Adhäsion zum Gegenstand auf und der ausgehärtete Formkörper ist folglich fest auf dem Gegenstand adhäsiv befestigt.

Solche weiteren Gegenstände können aus einem beliebigen Material sein, bevorzugt aus Metall, Kunststoff oder Holz, oder aus oberflächenbeschichteten solchen Materialien, beispielsweise pulverlackiertem Metall.

Solche weiteren Gegenstände können eine beliebige Form und Geometrie haben.

Sie müssen allerdings geometrisch so beschaffen sein, dass die Zusammensetzung über das erfindungsgemässe Verfahren auf ihnen appliziert werden kann.

Diese Ausführungsform des erfindungsgemässen Verfahrens erzeugt einen Formkörper aus ausgehärteter erfindungsgemässer Polyurethanzusammensetzung, der adhäsiv auf dem Gegenstand befestigt ist. Auf diese Weise können beispielsweise pulverlackierte Metallgegenstände mit gummiartigen Formkörpern versehen werden, die bis anhin nur über das aufwändige Festkleben von Gummielementen auf pulverlackierte Metellgegenstände zugänglich waren. Dies erlaubt eine deutliche Effizienzsteigerung in der industriellen Fertigung, da ein bisheriges Mehrschrittverfahren der Verklebung durch ein automatisiertes Einschrittverfahren gemäss vorliegender Erfindung ersetzt werden kann.

Ein konkretes Beispiel einer solchen Fertigung ist das Befestigen von Gummikörpern auf Stossdämpfern von Automobilen. Das Verfahren des Standes der Technik sieht vor, diese Stossdämpfer zunächst mit einem Primer vorzubehandeln und danach einen vorgängig hergestellten Gummikörper darauf zu befestigen.

Mit dem Verfahren nach der vorliegenden Erfindung kann eine Polyurethanzusammensetzung direkt auf den Stossdämpfer aufgetragen werden, wobei die Zusammensetzung in der gewünschten Form direkt mit dem Stossdämpfer Adhäsion aufbaut. Die Polyurethanzusammensetzung nach vorliegenden Erfindung besitzt in bevorzugten Ausführungsformen sehr gute Adhäsionseigenschaften zu pulverlackierten Metallen und benötigt keine Vorbehandlung mittels Primer. Ausserdem besitzt sie im ausgehärteten Zustand in bevorzugten Ausführungsformen gummiartige Eigenschaften wie Elastizität und Zähigkeit, welche denen eines herkömmlichen Gummikörpers nahezu identisch sind.

Ein weiterer Gegenstand der vorliegenden Erfindung ist ein Formkörper, hergestellt nach dem erfindungsgemässen Verfahren und aufgebracht auf einem Gegenstand oder Körper, wobei der Formkörper aus ausgehärteter Polyurethanzusammensetzung adhäsiv auf diesem Gegenstand oder Körper befestigt ist.

Im Folgenden wird die Erfindung durch Beispiele weiter erläutert, die die Erfindung aber in keiner Weise beschränken sollen.

### Beispiele

### Verwendete Substanzen:

**Tabelle 1: Verwendete Substanzen**

| | |
|---|---|
| Voranol CP 4755 | Voranol^{®} CP 4755 (Dow Chemical); Polyethertriol, CAS Nr. 9082-00-2; Mw: 5000 g/mol; OH-Zahl: 35 mg KOH/g |
| 1,5-Pentandiol | (Sigma Aldrich) |
| Thiocure GDMP | Thiocure^{®} GDMP (Bruno Bock Thiochemicals); Glycol-di(3-mercaptopropionat) |
| Desmodur CD-L | Desmodur^{®} CD-L (Covestro); modifiziertes Diphenylmethan-4,4'diisocyanat (MDI); NCO-Gehalt: 29.5 Gew.-% |
| Monarch 570 | Monarch^{®} 570 (Cabot Corp.); Russ (Füllstoff) |
| Whitetex | White Tex^{®} (BASF); kalziniertes Aluminiumsilicat (Füllstoff) |
| Bi-Kat. (2.68 mmol Bi /g) | 35 Gew.-% Coscat 83 (Organobismut-Katalysator; Coscat^{®} 83 (Vertellus Specialties Inc.)) in Weichmacher mit 1 Moläquivalent 8-Hydroxychinolin (bezogen auf Bi) |

### Herstellung der Komponenten A und B

Für jede Zusammensetzung wurden die in der untenstehenden Tabelle 2 angegebenen Inhaltsstoffe in den angegebenen Mengen (in Gewichtsteilen oder Gew.-%) der ersten Komponente **A** mittels eines Vakuumdissolvers unter Feuchtigkeitsausschluss zu einer homogenen Paste verarbeitet und luftdicht aufbewahrt. Ebenso wurden die in den Tabellen angegebenen Inhaltsstoffe der zweiten Komponente **B** verarbeitet und aufbewahrt. Die beiden Komponenten wurden jeweils in ein Kompartiment einer luftdichten Doppelkartusche eingefüllt.

**Tabelle 2: Zweikomponentige Polyurethanzusammensetzung für 3D-Druck**

| Komponente **A** | | | Komponente **B** | |
|---|---|---|---|---|
| **Inhaltsstoff** | **Gewichtsteile** | | **Inhaltsstoff** | **Gewichtsteile** |
| Voranol CP 4755 | 60 | | Desmodur CD-L | 44 |
| 1,5-Pentandiol | 12 | | Voranol CP-4755 | 32 |
| Monarch 570 | 10 | | Whitex | 15 |
| Whitex | 15.7 | | Monarch 570 | 10 |
| Thiocure GDMP | 1.5 | | *TOTAL* | *100* |
| Bi-Kat. | 0.8 | | | |
| *TOTAL* | *100* | | | |

### Druckversuch

Die oben erwähnte Doppelkartusche (wobei eine Kartusche der Doppelkartusche Komponente **A** enthielt und die andere Komponente **B**, beide Komponenten gemäss den Inhaltsangaben in Tabelle 2) wurde an einen 3D-Drucker angeschlossen, so dass der Kartuschenausgang in einen 10 cm langen Statikmischer mündete.

Der Auslass des Statikmischers mündete in einen Schlauch, welcher mit dem Druckkopf des 3D-Druckers verbunden war. Der Druckkopf besass eine runde Austrittsöffnung mit einem Durchmesser von 2 mm. Als 3D-Drucker wurde ein handelsüblicher Delta WASP 2040 3D-Drucker (Firma WASP c/o CSP S.r.l., Italien) verwendet. Die Doppelkartusche wurde über einen pneumatischen Kolben mit einer Fliessrate von 100 mL/min ausgepresst. Die beiden Komponenten A und B wurden im Volumenverhältnis **A**:**B** (v/v) von 1:1 vermischt. Die Verweilzeit im Mischer betrug ca. 10-20 s.

Damit konnte in einem kontinuierlichen Verfahren Schicht für Schicht eine zylindrische hohle Figur mit einer Höhe von 10 cm, einer Wandstärke von 2 mm und einem Durchmesser von 5 cm innerhalb von 2-3 min gedruckt werden. Die Zusammensetzung war direkt nach Applikation standfest und formstabil und härtete in der Folge kontinuierlich aus, wobei jedoch die Härtung einer Schicht noch nicht abgeschlossen war, wenn eine zweite Schicht darauf appliziert wurde.

Dies erlaubte eine gute Kohäsion zwischen den Schichten. Nach ca. 15 min war der Formkörper fest und hatte eine trockene Haut gebildet.

Der Formkörper wies eine glatte, schöne Oberfläche auf und war von fester, elastischer Konsistenz.

## Patentansprüche

1. Verfahren zur Applikation einer zweikomponentigen Polyurethanzusammensetzung mittels 3D-Druck, umfassend die Schritte
- Bereitstellen einer pumpfähigen ersten Komponente **A**, umfassend mindestens ein Polyol **A1** mit einer OH-Funktionalität im Bereich von 1.5 bis 4 und einem mittleren Molekulargewicht (Zahlenmittel) Mₙ im Bereich von 250 bis 15'000 g/mol, und
bevorzugt mindestens ein Diol **A2** mit zwei Hydroxylgruppen, die über eine C2- bis C9-Kohlenstoffkette verbunden sind, und
mindestens eine Verbindung **T**, die mindestens eine Thiolgruppe aufweist;
- Zuführen der ersten Komponente **A**, insbesondere mittels einer Pumpe, zu einem kontinuierlichen Mischer umfassend
• einen Einlass,
• einen Mischbereich mit mindestens einem statischen oder dynamischen Mischelement, der mit dem Einlass verbunden ist,
• einen Auslass, in den der Mischbereich mündet,
wobei die erste Komponente **A** durch den mindestens einen Einlass in den Mischbereich gefördert wird;
- Zuführen von einer pumpfähigen zweiten Komponente **B** in den Mischbereich des kontinuierlichen Mischers, wobei die zweite Komponente **B** mindestens ein Polyisocyanat **I** umfasst;
- Vermischen der ersten Komponente **A** mit der zweiten Komponente **B** im Mischbereich des kontinuierlichen Mischers zu einer gemischten, härtbaren Polyurethanzusammensetzung;
- Fördern der gemischten, härtbaren Polyurethanzusammensetzung zum Auslass; und
- schichtweises Applizieren der gemischten, härtbaren Polyurethanzusammensetzung, insbesondere über einen beweglichen Druckkopf;
wobei in einer der beiden Komponenten **A** und **B** zusätzlich mindestens ein Metallkatalysator **K** für die Reaktion von Hydroxylgruppen und Isocyanatgruppen enthalten ist, der Thiokomplexe bilden kann, und
das molare Verhältnis aller Thiolgruppen der mindestens einen Verbindung **T** zu allen Metallatomen des mindestens einen Metallkatalysators **K** zwischen 1:1 und 250:1 liegt.

2. Verfahren gemäss Anspruch 1, **dadurch gekennzeichnet, dass** der Metallkatalysator **K** eine Bismut(III)-Verbindung umfasst, bevorzugt ein Bismut(I I I)-carboxylat.

3. Verfahren gemäss Anspruch 2, **dadurch gekennzeichnet, dass** die Bismut(III)-Verbindung zusätzlich einen 8-Hydroxychinolinliganden oder einen 1,3-Ketoamidliganden aufweist.

4. Verfahren gemäss einem der Ansprüche 1 bis 3, **dadurch gekennzeichnet, dass** das Diol **A2** ausgewählt ist aus der Gruppe bestehend aus 1,3-Butandiol, 2,3-Butandiol, 1,4-Butandiol, 2-Methyl-1,3-propandiol, 1,2-Pentandiol, 1,5-Pentandiol, 2,4-Pentandiol, 2-Methyl-1,4-butandiol, 2,2-Dimethyl-1,3-propandiol, 1,2-Hexandiol, 1,6-Hexandiol, 3-Methyl-1,5-pentandiol, 1,2-Octandiol, 3,6-Octandiol, 1,9-Nonandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

5. Verfahren gemäss einem der vorhergehenden Ansprüche, **dadurch gekennzeichnet, dass** die mindestens eine Verbindung **T** eine Polythiolverbindung mit 2 bis 6 Thiolgruppen oder ein Mercaptosilan umfasst.

6. Verfahren gemäss Anspruch 5, **dadurch gekennzeichnet, dass** die mindestens eine Verbindung **T** ausgewählt ist aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

7. Verfahren gemäss einem der vorhergehenden Ansprüche, **dadurch gekennzeichnet, dass** das molare Verhältnis aller Thiolgruppen der mindestens einen Verbindung **T** zu allen Metallatomen des mindestens einen Metallkatalysators **K** zwischen 5:1 und 100:1 liegt.

8. Verfahren gemäss einem der vorhergehenden Ansprüche, **dadurch gekennzeichnet, dass** der Metallkatalysator **K** in der ersten Komponente **A** enthalten ist.

9. Verfahren gemäss einem der vorhergehenden Ansprüche, **dadurch gekennzeichnet, dass** das Polyol **A1** ein Polyetherpolyol umfasst.

10. Verfahren gemäss einem der vorhergehenden Ansprüche, **dadurch gekennzeichnet, dass** das Polyisocyanat **I** eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, ist.

11. Verfahren gemäss einem der vorgehenden Ansprüche, **dadurch gekennzeichnet, dass** die zweite Komponente **B** ein Isocyanatgruppen aufweisendes Polyurethanpolymer enthält.

12. Verfahren gemäss einem der vorgehenden Ansprüche, **dadurch gekennzeichnet, dass** die Zusammensetzung weniger als 0.5 Gew.-%, bezogen auf die gesamte Zusammensetzung, an Carbonsäuren enthält.

13. Verfahren gemäss einem der vorgehenden Ansprüche, **dadurch gekennzeichnet, dass** die beiden Komponenten **A** und **B** jeweils eine Viskosität, gemessen bei 20°C auf einem Platten-Platten Viskosimeter mit Plattenabstand 1 mm und Plattendurchmesser 25 mm, von weniger als 75 Pa s bei einer Scherrate von 10 s⁻¹, aufweisen.

14. Verfahren gemäss einem der vorgehenden Ansprüche, **dadurch gekennzeichnet, dass** der statische oder dynamische Mischer auf einem beweglichen Druckkopf angebracht ist.

15. Formkörper, hergestellt mit dem Verfahren gemäss einem der Ansprüche 1 bis 14.

## Claims

1. A method of applying a two-component polyurethane composition by means of 3D printing, comprising the steps of
- providing a pumpable first component **A** comprising at least one polyol **A1** having an OH functionality in the range from 1.5 to 4 and an average molecular weight (number average) Mₙ in the range from 250 to 15 000 g/mol, and
preferably at least one diol **A2** having two hydroxyl groups joined via a C2 to C9 carbon chain, and
at least one compound **T** having at least one thiol group;
- feeding the first component **A**, especially by means of a pump, to a continuous mixer comprising
• an inlet,
• a mixing region having at least one static or dynamic mixing element connected to the inlet,
• an outlet into which the mixing region opens,
wherein the first component **A** is conveyed through the at least one inlet into the mixing region;
- feeding a pumpable second component **B** into the mixing region of the continuous mixer, where the second component **B** comprises at least one polyisocyanate **I**;
- mixing the first component **A** with the second component **B** in the mixing region of the continuous mixer to give a mixed curable polyurethane composition;
- conveying the mixed curable polyurethane composition to the outlet; and
- applying the mixed curable polyurethane composition layer by layer, especially by means of a moving printhead;
wherein one of the two components **A** and **B** additionally includes at least one metal catalyst **K** for the reaction of hydroxyl groups and isocyanate groups that is able to form thio complexes, and
the molar ratio of all the thiol groups in the at least one compound **T** to all metal atoms in the at least one metal catalyst **K** is between 1:1 and 250:1.

2. The method as claimed in claim 1, **characterized in that** the metal catalyst **K** comprises a bismuth(III) compound, preferably a bismuth(III) carboxylate.

3. The method as claimed in claim 2, **characterized in that** the bismuth(III) compound additionally contains an 8-hydroxyquinoline ligand or a 1,3-ketoamide ligand.

4. The method as claimed in any of claims 1 to 3, **characterized in that** the diol **A2** is selected from the group consisting of butane-1,3-diol, butane-2,3-diol, butane-1,4-diol, 2-methylpropane-1,3-diol, pentane-1,2-diol, pentane-1,5-diol, pentane-2,4-diol, 2-methylbutane-1,4-diol, 2,2-dimethylpropane-1,3-diol, hexane-1,2-diol, hexane-1,6-diol, 3-methylpentane-1,5-diol, octane-1,2-diol, octane-3,6-diol, nonane-1,9-diol, 2-ethylhexane-1,3-diol, 2,2,4-trimethylpentane-1,3-diol, 2-butyl-2-ethylpropane-1,3-diol, 2,7-dimethyloctane-3,6-diol, cyclohexane-1,4-diol, cyclohexane-1,3-dimethanol and cyclohexane-1,4-dimethanol.

5. The method as claimed in any of the preceding claims, **characterized in that** the at least one compound **T** comprises a polythiol compound having 2 to 6 thiol groups, or a mercaptosilane.

6. The method as claimed in claim 5, **characterized in that** the at least one compound **T** is selected from the group consisting of ethylene glycol di(3-mercaptopropionate), ethylene glycol dimercaptoacetate, dipentaerythritol hexa(3-mercaptopropionate), and 3-mercaptopropyltrimethoxysilane.

7. The method as claimed in any of the preceding claims, **characterized in that** the molar ratio of all the thiol groups in the at least one compound **T** to all metal atoms in the at least one metal catalyst **K** is between 5:1 and 100:1.

8. The method as claimed in any of the preceding claims, **characterized in that** the metal catalyst **K** is present in the first component **A**.

9. The method as claimed in any of the preceding claims, **characterized in that** the polyol **A1** comprises a polyether polyol.

10. The method as claimed in any of the preceding claims, **characterized in that** the polyisocyanate **I** is a form of diphenylmethane 4,4'-, 2,4'- or 2,2'-diisocyanate that is liquid at room temperature and any mixtures of these isomers (MDI) in the form of polymeric MDI or MDI containing proportions of oligomers or derivatives, in particular carbodiimides.

11. The method as claimed in any of the preceding claims, **characterized in that** the second component **B** comprises a polyurethane polymer containing isocyanate groups.

12. The method as claimed in any of the preceding claims, **characterized in that** the composition comprises less than 0.5% by weight of carboxylic acids, based on the overall composition.

13. The method as claimed in any of the preceding claims, **characterized in that** the two components **A** and **B** each have a viscosity, measured at 20°C on a plate-plate viscometer with plate separation 1 mm and plate diameter 25 mm, of less than 75 Pa·s at a shear rate of 10 s⁻¹.

14. The method as claimed in any of the preceding claims, **characterized in that** the static or dynamic mixer is mounted on a moving printhead.

15. A shaped body produced by the method as claimed in any of claims 1 to 14.

## Revendications

1. Procédé pour l'application d'une composition à deux composants de polyuréthane par impression 3D, comprenant les étapes de
- préparation d'un premier composant A pouvant être pompé, comprenant
au moins un polyol A1 présentant une fonctionnalité OH dans la plage de 1,5 à 4 et un poids moléculaire moyen (moyenne en nombre) Mₙ dans la plage de 250 à 15.000 g/mole et
de préférence au moins un diol A2 présentant deux groupes hydroxyle, qui sont reliés par l'intermédiaire d'une chaîne carbonée en C2-C9 et au moins un composé T qui présente au moins un groupe thiol ;
- introduction du premier composant A, en particulier au moyen d'une pompe, dans un mélangeur continu comprenant
- une entrée,
- une zone de mélange présentant au moins un élément de mélange statique ou dynamique, qui est reliée à l'entrée,
- une sortie dans laquelle débouche la zone de mélange,
le premier composant A étant transporté dans la zone de mélange à travers ladite au moins une entrée ;
- introduction d'un deuxième composant B pouvant être pompé dans la zone de mélange de mélangeur continu, le deuxième composant B comprenant au moins un polyisocyanate I ;
- mélange du premier composant A avec le deuxième composant B dans la zone de mélange du mélangeur continu en une composition mélangée, durcissable de polyuréthane ;
- transport de la composition mélangée, durcissable de polyuréthane vers la sortie ; et
- application par couches de la composition mélangée, durcissable de polyuréthane, en particulier par l'intermédiaire d'une tête d'impression mobile ;
au moins un catalyseur métallique K pour la réaction de groupes hydroxyle et de groupes isocyanate, qui peut former des complexes à fonctionnalité thio, étant contenu en plus dans un des deux composants A et B et le rapport molaire de tous les groupes thiol dudit au moins un composé T à tous les atomes métalliques dudit au moins un catalyseur métallique K étant situé entre 1:1 et 250:1.

2. Procédé selon la revendication 1, **caractérisé en ce que** le catalyseur métallique K comprend un composé du bismuth (III), de préférence un carboxylate de bismuth (III) .

3. Procédé selon la revendication 2, **caractérisé en ce que** le composé de bismuth (III) présente en outre un ligand 8-hydroxyquinoléine ou un ligand 1,3-cétoamide.

4. Procédé selon l'une quelconque des revendications 1 à 3, **caractérisé en ce que** le diol A2 est choisi dans le groupe constitué par le 1,3-butanediol, le 2,3-butanediol, le 1,4-butanediol, le 2-méthyl-1,3-propanediol, le 1,2-pentanediol, le 1,5-pentanediol, le 2,4-pentanediol, le 2-méthyl-1,4-butanediol, le 2,2-diméthyl-1,3-propanediol, le 1,2-hexanediol, le 1,6-hexanediol, le 3-méthyl-1,5-pentanediol, le 1,2-octanediol, le 3,6-octanediol, le 1,9-nonanediol, le 2-éthyl-1,3-hexanediol, le 2,2,4-triméthyl-1,3-pentanediol, le 2-butyl-2-éthyl-1,3-propanediol, le 2,7-diméthyl-3,6-octanediol, le 1,4-cyclohexanediol, le 1,3-cyclohexanediméthanol et le 1,4-cyclohexanediméthanol.

5. Procédé selon l'une quelconque des revendications précédentes, **caractérisé en ce que** ledit au moins un composé T comprend un composé polythiol comprenant 2 à 6 groupes thiol ou un mercaptosilane.

6. Procédé selon la revendication 5, **caractérisé en ce que** ledit au moins un composé T est choisi dans le groupe constitué par le di(3-mercaptopropionate) d'éthylèneglycol, le dimercaptoacétate d'éthylèneglycol, l'hexa(3-mercaptopropionate) de dipentaérythritol et le 3-mercaptopropyltriméthoxysilane.

7. Procédé selon l'une quelconque des revendications précédentes, **caractérisé en ce que** le rapport molaire de tous les groupes thiol dudit au moins un composé T à tous les atomes métalliques dudit au moins un catalyseur métallique K est situé entre 5:1 et 100:1.

8. Procédé selon l'une quelconque des revendications précédentes, **caractérisé en ce que** le catalyseur métallique K est contenu dans le premier composant A.

9. Procédé selon l'une quelconque des revendications précédentes, **caractérisé en ce que** le polyol A1 comprend un polyétherpolyol.

10. Procédé selon l'une quelconque des revendications précédentes, **caractérisé en ce que** le polyisocyanate I est une forme liquide à température ambiante du diisocyanate de 4,4'-diphénylméthane, de 2,4'-diphénylméthane ou de 2,2'-diphénylméthane et des mélanges quelconques de ces isomères (MDI) sous forme de MDI polymère ou de MDI présentant des proportions d'oligomères ou de dérivés, en particulier des carbodiimides.

11. Procédé selon l'une quelconque des revendications précédentes, **caractérisé en ce que** le deuxième composant B est un polymère de polyuréthane présentant des groupes isocyanate.

12. Procédé selon l'une quelconque des revendications précédentes, **caractérisé en ce que** la composition contient moins de 0,5% en poids, par rapport à la composition totale, d'acides carboxyliques.

13. Procédé selon l'une quelconque des revendications précédentes, **caractérisé en ce que** les deux composants A et B présentent chacun une viscosité, mesurée à 20°C sur un viscosimètre à plaque-plaque, présentant une distance entre les plaques de 1 mm et un diamètre de plaque de 25 mm, inférieure à 75 Pa.s à un taux de cisaillement de 10 s⁻¹.

14. Procédé selon l'une quelconque des revendications précédentes, **caractérisé en ce que** le mélangeur statique ou dynamique est agencé sur une tête d'impression mobile.

15. Corps façonné, produit par le procédé selon l'une quelconque des revendications 1 à 14.
